(19) Europäisches Patentamt
European Patent Office
Office européen des brevets

(11) EP 2 556 229 B1

(12) **FASCICULE DE BREVET EUROPEEN**

(45) Date de publication et mention de la délivrance du brevet:
**04.11.2015 Bulletin 2015/45**

(21) Numéro de dépôt: **11730350.3**

(22) Date de dépôt: **07.04.2011**

(51) Int Cl.:
***F02D 35/00*** *(2006.01)* ***B60W 40/02*** *(2006.01)*
***B60W 40/12*** *(2012.01)* ***B60W 40/00*** *(2006.01)*

(86) Numéro de dépôt international:
**PCT/FR2011/050793**

(87) Numéro de publication internationale:
**WO 2011/124860 (13.10.2011 Gazette 2011/41)**

(54) **PROCÉDÉ D'ESTIMATION DE LA TEMPÉRATURE INITIALE D'UN ORGANE MÉCANIQUE D'UN VÉHICULE AU DÉMARRAGE DU VÉHICULE**

VERFAHREN ZUR KALKULATION DER AUSGANGSTEMPERATUR EINES MECHANISCHEN ELEMENTS EINES FAHRZEUGES BEIM FAHRZEUGSTART

METHOD FOR ESTIMATING THE INITIAL TEMPERATURE OF A MECHANICAL MEMBER OF A VEHICLE AT THE START-UP OF THE VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2010 FR 1052663**

(43) Date de publication de la demande:
**13.02.2013 Bulletin 2013/07**

(73) Titulaire: **Renault S.A.S.**
**92100 Boulogne-Billancourt (FR)**

(72) Inventeurs:
- **FOUSSARD, François**
  **78000 Versailles (FR)**
- **GUEGAN, Stéphane**
  **F-78000 Versailles (FR)**
- **ROMANI, Nicolas**
  **F-75016 Paris (FR)**
- **SAINT LOUP, Philippe**
  **F-78760 Jouars Pontchartrain (FR)**

(56) Documents cités:
**FR-A1- 2 921 155**
**US-A1- 2002 134 350**
**US-A1- 2009 182 489**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 556 229 B1

## Description

L'invention se situe dans le domaine de la surveillance en température des organes mécaniques d'un véhicule propulsé par un moteur à combustion interne. Pendant le roulage du véhicule, afin d'estimer la température d'un organe mécanique, on calcule en général l'énergie thermique dissipée par frottement dans cet organe, ainsi que l'énergie thermique cédée par cet organe au milieu ambiant, c'est-à-dire à l'air circulant sous le capot moteur ou sous le véhicule. Dans le cas de véhicules à quatre roues motrices, il est par exemple nécessaire de connaître la température du coupleur qui transmet le couple moteur disponible d'un train de roues du véhicule vers l'autre train de roues du véhicule.

US 2009/182 489 A1 divulgue un système selon le préambule de la revendication 1.

La demande de brevet EP 1 308 336 décrit une méthode de gestion d'un coupleur en fonction de l'échauffement du coupleur. Cependant, ce document propose d'évaluer l'échauffement du coupleur, soit en terme de différence de température par rapport à un état initial, soit en terme d'énergie thermique produite par frottement. Ce document ne propose donc pas de méthode pour calculer la température absolue du coupleur. Cette température peut être un paramètre crucial, si par exemple la température extérieure est elle-même élevée, ou si le coupleur est déjà chaud sans que cela soit pris en compte par le système, suite à un démarrage du véhicule après un arrêt peu prolongé n'ayant pas permis au coupleur de refroidir jusqu'à la température ambiante. Pour réduire les coûts de fabrication et les coûts d'entretien du véhicule, on limite au strict nécessaire le nombre de capteurs de température installés sur le véhicule. Les méthodes de surveillance développées devront donc de préférence permettre de se passer d'un capteur de température sur l'organe à surveiller (par exemple, un coupleur).

Accessoirement, les méthodes de surveillance développées feront appel, ou de préférence ne feront pas appel à un capteur de température de l'air extérieur au véhicule. Enfin, pour économiser les coûts de fabrication et l'énergie consommée par le véhicule, on souhaite pouvoir éteindre totalement toute l'électronique de commande du véhicule quand le véhicule est à l'arrêt prolongé. On recherche donc des solutions évitant de maintenir en veille une horloge électronique liée au système de commande présent. Au moment où les systèmes électroniques de commande du véhicule sont mis sous tension, ils doivent donc être aptes à définir une valeur initiale de température des organes dont ils calculent par la suite les variations de température en effectuant des bilans thermiques.

L'utilisation d'une valeur arbitraire par défaut est risquée car si le véhicule redémarre après une période d'arrêt courte, cette valeur par défaut risque d'être sous-estimée. On risque donc de sous-estimer toutes les températures du coupleur ou de l'organe calculées par la suite, et d'endommager l'organe à surveiller.

L'invention a pour but de proposer une méthode d'estimation d'une température initiale d'un organe dissipatif de véhicule, permettant d'attribuer une valeur initiale de température en l'absence de capteurs de température sur l'organe et en l'absence d'informations, par une horloge, du temps écoulé depuis la dernière utilisation du véhicule.

Un système d'estimation de la température d'un organe mécanique d'un véhicule après un arrêt du véhicule, comprend :

- un capteur de température d'un premier élément du véhicule qui peut notamment être une réserve de fluide du véhicule ;
- un moyen d'estimation de la température d'air extérieure au véhicule ;
- un premier module d'estimation de la température de l'organe pendant le roulage du véhicule.

Le système comprend en outre :

- des moyens de mémorisation, pendant l'arrêt du véhicule, d'une valeur de température d'air extérieure, d'une valeur de température du premier élément, et d'une valeur de température de l'organe ;
- un deuxième module apte à calculer une durée d'arrêt du véhicule en fonction d'une valeur de température d'air extérieure, d'une température mémorisée du premier élément et d'une température mesurée du premier élément ;
- un troisième module apte à calculer un historique thermique de variation de température de l'organe pendant l'arrêt du véhicule, en fonction d'une valeur de température d'air extérieure, d'une température mémorisée de l'organe et d'une durée d'arrêt du véhicule calculée par le deuxième module.

Avantageusement, le troisième module est configuré pour calculer l'évolution en température de l'organe pendant une durée prédéterminée après l'arrêt du véhicule, puis pour s'éteindre jusqu'à un nouveau démarrage du véhicule.

Selon un mode de réalisation préféré, le troisième module est configuré pour attribuer à la température estimée de l'organe au redémarrage du véhicule, la dernière valeur de température calculée pour l'organe avant l'extinction du troisième module, si la durée d'arrêt du véhicule que lui transmet le deuxième module est inférieure ou égale à la durée prédéterminée.

Le deuxième et respectivement le troisième modules peuvent calculer la durée d'arrêt et l'historique de température à l'arrêt de l'organe, ou sa dernière température à l'arrêt, respectivement en effectuant un bilan thermique sur

les échanges entre le premier élément et l'air extérieur au véhicule, ou respectivement en effectuant un bilan thermique sur les échanges entre l'organe et l'air extérieur au véhicule.

De manière préférentielle, les deuxième et troisième modules utilisent des profils exponentiels de variation, par rapport au temps, de l'écart d'une température par rapport à la température extérieure au véhicule, pour estimer la durée de l'arrêt ou pour estimer l'ampleur d'une variation de température.

Le système peut comprendre un ou plusieurs premiers modules aptes à calculer une ou plusieurs températures internes à un coupleur transférant du couple d'un train de roues du véhicule à un autre train de roues du véhicule, et comporter un ou plusieurs troisièmes modules aptes à calculer une ou plusieurs températures internes du coupleur après un arrêt de durée indéterminée du véhicule.

Selon un mode de réalisation avantageux, à chaque valeur estimée de température, est associé un indicateur booléen de validité et une valeur de température par défaut, qui est substituée à la valeur estimée si l'indicateur booléen prend une valeur prédéterminée.

De manière préférentielle, le premier élément est du liquide de refroidissement présent au voisinage du moteur.

Selon un autre aspect, un véhicule à moteur à combustion interne est équipé du système précédent d'estimation de température d'un organe mécanique après un arrêt du véhicule, et est équipé d'un module d'estimation de la température extérieure au véhicule relié à un capteur de température d'air admis dans le moteur du véhicule, à un capteur de température de liquide de refroidissement du moteur, et à un moyen d'estimation de la vitesse du véhicule.

Selon un troisième aspect, un procédé d'estimation de la température d'un organe mécanique d'un véhicule à moteur thermique après un arrêt du véhicule, comprend les étapes suivantes :

- à l'arrêt du véhicule, on écrit dans des mémoires mortes une dernière température mesurée de liquide de refroidissement du véhicule, une dernière température mesurée ou estimée d'air extérieur au véhicule, une dernière température estimée de l'organe ;
- -au redémarrage du véhicule, on mesure la température de liquide de refroidissement du véhicule, et on déduit, à partir de cette température et des trois températures mémorisées précédentes, une nouvelle température de l'organe,
- -on utilise cette nouvelle température de l'organe comme température initiale pour une estimation ultérieure de la température de l'organe pendant le roulage du véhicule.

Avantageusement, la relation qui relie la dernière température mesurée ou estimée d'air extérieur $T_a$, la dernière température estimée de l'organe $T_{max}$, la dernière température $T_0$ mesurée au même moment pour le liquide de refroidissement du véhicule, la température $T_1$ du liquide de refroidissement au démarrage, et la nouvelle température de l'organe $T_{ini}$, est une relation exponentielle de la forme :

$$\frac{T_o - T_a}{T_1 - T_a} = \left(\frac{T_{ini} - T_a}{T_{\max} - T_a}\right)^A,$$

où A est une valeur réelle positive.

D'autres buts, avantages et caractéristiques de l'invention apparaîtront à l'examen de la description détaillée de quelques modes de réalisation donnés à titre d'exemples non limitatifs, et illustrés par les dessins annexés, sur lesquels :

- la figure 1 illustre un véhicule à quatre roues motrices équipé d'un système d'estimation de la température d'un coupleur suivant l'invention ;
- la figure 2 illustre un mode de fonctionnement possible d'un module d'estimation du temps d'arrêt du véhicule entre deux missions ;
- la figure 3 illustre à l'aide de courbes de température mesurées et estimées, le principe de détermination d'une température initiale de coupleur suivant l'invention.

Tel qu'illustré sur la figure 1, un véhicule 1 comprend un train de roues avant 2 et un train de roues arrière 3, le train avant 2 et le train arrière 3 étant reliés par un coupleur 4 apte à solidariser totalement ou partiellement en rotation l'axe du train avant 2, et l'axe du train arrière 3. Chacune des roues du train avant 2 est munie d'un capteur de vitesse de rotation 12 et chacune des roues du train arrière 3 est munie d'un capteur de vitesse de rotation 13. Les valeurs enregistrées par les capteurs 12 et 13 permettent notamment de calculer la différence de vitesse de rotation entre l'axe du train avant 2 et l'axe du train arrière 3, ainsi que la vitesse instantanée du véhicule 1. De tels capteurs sont généralement présents sur les quatre roues d'un véhicule à quatre roues motrices, ou plus généralement sur les quatre roues de véhicules équipés d'un système d'antipatinage de type ABS, ou d'un système de correction de trajectoire de type ESP.

L'axe du train avant 2 est relié par un système de transmission (non représenté) à un moteur à combustion interne 5, comprenant notamment une entrée d'air 6, amenant de l'air frais au travers d'un filtre à air 9 vers des cylindres 7 du moteur. Le moteur 5 est équipé d'un circuit de refroidissement 10. Un capteur de température 8 est disposé au niveau du circuit d'entrée d'air 6, entre le filtre à air 9 et l'entrée des cylindres 7. Un capteur de température 11 est disposé au voisinage du moteur 5 en contact avec le liquide du circuit de refroidissement 10. Les capteurs de vitesse de roues 12 et 13, et les capteurs de température 8 et 11, sont reliés par des connexions respectivement 16, 17, 14, 15 à une unité de commande électronique 18. L'unité de commande électronique (UCE) 18 comprend notamment un module 19 d'estimation de la température d'air extérieur au véhicule, un module 20 d'estimation du temps passé depuis la dernière utilisation du véhicule, et un module 21 d'estimation de la température du coupleur 4 à la fin de l'arrêt du véhicule. L'UCE 18 comprend en outre des moyens de mémorisation 22 reliés aux trois modules 19, 20, 21 précédents, et permettant à l'UCE 18 d'écrire dans des mémoires mortes certaines valeurs issues de calculs ou de mesures qu'elle a en mémoire vive juste avant l'extinction du moteur 5, ou juste avant l'extinction de l'UCE 18 elle-même.

Le module 20 est relié par la connexion 15 au capteur 11 de température de liquide de refroidissement, ainsi qu'aux modules 19 et 21.

Le module 19 est relié par les connections 16 et 17 aux capteurs de vitesse de roues 12 et 13, par les connexions 14 et 15 aux deux capteurs de température 8 et 11. De manière alternative, le module 19 peut être simplement relié à un capteur de température d'air extérieur au véhicule. Dans le premier cas, le module 19 peut par exemple utiliser les valeurs mesurées par les capteurs 8 et 11, de température d'air admis dans le moteur et de température de liquide de refroidissement, pour déterminer une température initiale probable d'air extérieur au véhicule. Le module 19 peut ensuite déterminer les variation estimées de température d'air extérieur en effectuant un filtrage mathématique sur la température mesurée par le capteur 8 de température d'air admis dans le moteur, ce filtrage étant conçu pour limiter les gradients de température extérieure estimée, en imposant deux valeurs de gradient maximal différentes suivant que la vitesse instantanée du véhicule est plus ou moins élevée qu'une valeur seuil. La vitesse instantanée du véhicule peut-être déduite par le module 19 à partir des valeurs de vitesses instantanées de rotation des roues, délivrées par les deux capteurs 12 et par les deux capteurs 13.

L'UCE 18 comprend également un module 23 permettant de calculer, quand le véhicule roule, la température du coupleur 4. Cette température du coupleur 4 est par exemple calculée en effectuant un bilan thermique prenant en compte l'énergie engendrée par frottement dans le coupleur, à partir de la différence de vitesse de rotation entre l'axe du train avant 2 et l'axe du train arrière 3, et l'énergie cédée à l'air circulant autour du coupleur.

Lorsque le moteur du véhicule vient d'être arrêté et que le contact du tableau de bord a été coupé, l'UCE 18 inscrit dans une des mémoires des moyens de mémorisation 22, la dernière valeur estimée de température du coupleur 4 pendant son fonctionnement, calculée par le module 23. Elle inscrit également dans une autre mémoire des moyens 22, la dernière température estimée, par le module 19, (ou, dans d'autres variantes de réalisation de l'invention, la dernière valeur mesurée d'air extérieur au véhicule). Elle inscrit enfin, dans une troisième mémoire morte, la dernière valeur, mesurée par le capteur 11, de température de liquide de refroidissement.

Après la coupure du contact, l'unité de commande électronique 18 reste active pendant une durée prédéterminée, afin de mieux prendre en compte un éventuel redémarrage rapproché du véhicule. Cette durée prédéterminée peut être par exemple de quelques minutes à quelques dizaines de minutes, suivant le compromis que l'on souhaite choisir, entre la réactivité du système de commande du véhicule lors d'un redémarrage à chaud, et la consommation électrique engendrée par le mode veille. Pendant cette durée prédéterminée, l'unité de commande électronique peut éventuellement calculer, à intervalles de temps réguliers, la température du coupleur 4 en tenant compte de sa dernière température au moment de l'extinction du moteur, et en tenant compte des échanges thermiques avec l'air extérieur pendant la durée prédéterminée de veille de l'unité de commande électronique.

L'unité de commande électronique 18 peut inscrire dans une mémoire des moyens 22, en plus de la température estimée du coupleur 4 au moment de l'extinction du moteur, la température estimée du coupleur 4 juste avant l'extinction finale d'une unité de commande électronique 18. La durée prédéterminée de veille de l'unité de commande électronique est également enregistrée en tant que paramètre de calcul dans une mémoire morte, inscriptible ou non réinscriptible, de l'unité de commande électronique 18. Quand l'unité de commande électronique 18 est remise sous tension en vue de redémarrer le véhicule, le module 20 d'estimation du temps passé depuis la dernière utilisation du véhicule enregistre une valeur actuelle de température de liquide de refroidissement, qui lui est délivrée par le capteur 11. Le module 20 accède également à la dernière valeur de température de liquide de refroidissement enregistrée dans les moyens de mémorisation 22, ainsi qu'à la dernière température d'air extérieur au véhicule enregistrée dans les moyens de mémorisation 22.

Pour calculer le temps écoulé depuis l'extinction du moteur, le module 20 utilise un modèle du premier ordre représentant les échanges thermiques entre le liquide de refroidissement et l'air extérieur au véhicule, en supposant qu'il existe un coefficient d'échange global $C_{liq}$ permettant d'écrire :

$$\frac{dT_{liq}}{dt} = -\frac{(T_{liq} - T_a)}{C_{1iq}} \qquad \text{(équation 1)}$$

où :

$T_{liq}$ est la température du liquide de refroidissement,

$\frac{dT_{liq}}{dt}$ est la dérivée de cette température de liquide de refroidissement par rapport au temps,

$T_a$ est la température d'air extérieur au véhicule, et

$C_{liq}$ est un coefficient d'échange entre le liquide de refroidissement et les parties du moteur en contact thermique avec ce liquide et l'air extérieur au véhicule.

La durée écoulée entre les deux mesures de température de liquide de refroidissement peut donc s'écrire :

$$\Delta t = C_{liq} \ln\left(\frac{T_0 - T_a}{T_1 - T_a}\right) \qquad \text{(équation 2)}$$

où :

$\Delta t$ est l'intervalle de temps séparant la première mesure de température, de résultat To, et la deuxième mesure de température, de résultat $T_1$ du liquide de refroidissement ;

$T_a$ est la température d'air extérieur au véhicule, et

$C_{liq}$ est une constante représentant le coefficient d'échange global entre le moteur et le liquide de refroidissement et l'air extérieur au véhicule.

Dans le cas où le résultat du calcul de $\Delta t$ est inférieur à une valeur $\Delta t_{extinct}$ représentant la durée prédéterminée de veille de l'unité de commande électronique, le module 20 interprétera que la durée d'extinction de l'unité de commande électronique 18 est réduite à zéro, c'est-à-dire que le module 20 considérera que le véhicule vient de redémarrer juste après avoir éteint l'unité de commande électronique 18.

Une fois que le module d'estimation du temps passé 20 a déterminé la durée d'arrêt du véhicule, le module 20 transmet au module 21 au moins une valeur traduisant ce temps d'arrêt. A cette fin il peut transmettre, soit la valeur $\Delta t$ séparant le dernier instant d'extinction du moteur et l'instant de son redémarrage, ou bien la valeur $\Delta t_{mission}$ représentant la durée séparant l'extinction complète de l'unité de commande électronique et le nouveau redémarrage du moteur, les deux durées étant reliées par la relation :

$$\Delta t = \Delta t_{extinct} + \Delta t_{mission} \qquad \text{(équation 3)}$$

où $\Delta t_{extinct}$ représente la durée prédéterminée de veille de l'unité de commande électronique 18 après arrêt du moteur 5.

Une fois que le module 21 dispose de l'intervalle de temps séparant le dernier arrêt et le redémarrage du moteur, il va lire dans les moyens de mémorisation 22 la dernière température enregistrée comme température d'air extérieure au véhicule $T_a$ et il va lire une dernière valeur enregistrée de température estimée du coupleur, qui peut être soit une température $T_{max}$ du coupleur au moment de l'extinction du moteur, ou alors une température $T_{coff}$ du coupleur calculée par l'unité de commande électronique comme étant la température du coupleur au moment de l'extinction de l'unité de commande électronique 18.

L'unité de commande électronique 18 effectue alors une estimation de la température $T_{ini}$ du coupleur au moment du démarrage du véhicule en effectuant un bilan thermique des échanges du coupleur avec l'air extérieur au véhicule, entre le dernier moment où la température du coupleur a été calculée, et le moment où est mesurée à nouveau la température $T_1$ du liquide de refroidissement au moment du démarrage du moteur.

On suppose à nouveau qu'il existe un coefficient d'échange global $C_2$ entre le coupleur et l'air extérieur au véhicule, si bien que l'unité de commande électronique 18 peut par exemple estimer la température du coupleur $T_{ini}$ au moment du redémarrage selon l'une des équations suivantes :

$$T_{ini} = T_a + (T_{max} - T_a)\exp\left(-\frac{\Delta t}{C_2}\right) \qquad \text{(équation 4)}$$

ou

$$T_{ini} = T_a + (T_{coff} - T_a)\exp\left(-\frac{\Delta t_{mission}}{C_2}\right) \qquad \text{(équation 5)}$$

Une fois que le module 21 d'estimation de la température de redémarrage du coupleur a calculé la nouvelle valeur Tini, il peut transmettre cette valeur au module 23 qui continue à évaluer la température du coupleur pendant le roulage du véhicule.

La figure 2 illustre un mode de réalisation possible du module 20 d'estimation du temps écoulé depuis la dernière mise hors tension des systèmes de surveillance du véhicule. On retrouve sur la figure 2 quelques éléments communs à la figure 1, les mêmes éléments étant alors désignés par les mêmes références. Le module 20 va lire dans les moyens de mémorisation 22 une température $T_0$ qui est la dernière température de liquide de refroidissement mémorisée avant l'extinction du système, et une température $T_a$ qui est une dernière température d'air extérieur au véhicule mémorisée avant l'extinction du système. Il envoie ensuite ces deux valeurs sur un soustracteur 30 qui calcule la valeur absolue de la différence entre les deux températures et l'envoie sur un comparateur 32 qui effectue un test pour savoir si la différence est inférieure en valeur absolue à un paramètre $\Delta t_{min}$.

Le module 20 reçoit par les connexions 15 une température mesurée $T_1$ du liquide de refroidissement au moment du redémarrage du moteur. Un soustracteur 31 calcule la valeur absolue de la différence entre cette température $T_1$ et la température $T_a$ mémorisée comme température d'air extérieur au véhicule. Cette différence est envoyée sur un comparateur 33 qui regarde si elle est inférieure paramètre de durée minimale $\Delta t_{min}$. Les comparateurs 32 et 33 envoient leur résultat sur un opérateur booléen « ou » 34, qui envoie son résultat sur l'entrée de pilotage d'un commutateur trois voies 35. Le résultat de l'opérateur 34 vaut par exemple 1 si l'une au moins de deux différences en valeur absolue est inférieure aux paramètres $\Delta t_{min}$, et il vaut zéro dans le cas contraire. Les différences calculées par les soustracteurs 30 et 31 sont ensuite respectivement seuillées par les opérateurs de seuillage 36 et 37. Un diviseur 38 effectue ensuite le quotient des différences $T_0$-$T_a$ et de $T_1$-$T_a$. Le quotient est ensuite envoyé sur un nouvel opérateur de seuillage 39. Un convertisseur logarithmique 40 calcule ensuite le logarithme du résultat de l'opérateur 39 et le transmet à un multiplicateur 41 qui le multiplie par une valeur $C_{liq}$. Un nouvel opérateur de seuillage 42 effectue un seuillage du résultat de manière à ce qu'il soit compris entre une valeur $\Delta t_{extinct}$ et le paramètre $\Delta t_{max}$. La valeur $\Delta t_{extinct}$ utilisée par l'opérateur de seuillage 42 peut être, soit un paramètre fixe, inscrit dans une mémoire réinscriptible ou non, soit peut être un paramètre variable inscrit à chaque extinction du système dans les moyens de mémorisation 22. Le résultat de l'opérateur 42 est envoyé sur l'entrée négative du commutateur 35, qui reçoit sur son entrée positive la valeur du paramètre $\Delta t_{max}$. En fonction des résultats de l'opérateur booléen 34, la sortie du commutateur 35 prend pour valeur $\Delta t_{max}$, si l'une des différences de température calculées par les opérateurs 30 et 31 est inférieure au seuil $\Delta t_{min}$, ou prend la valeur calculée par l'opérateur 42, dans le cas contraire. Au résultat sortant du commutateur35, on peut ensuite soustraire la valeur $\Delta t_{extinct}$ correspondant à la durée de veille de l'unité de commande électronique 18, pour obtenir une durée $\Delta t_{mission}$ correspondant à la durée écoulée entre l'extinction de l'unité de commande électronique 18, et le redémarrage du véhicule. Cette valeur $\Delta t_{mission}$ est ensuite envoyée au module 21 qui l'utilise pour estimer la nouvelle température du coupleur 4.

La figure 3 illustre à l'aide de courbes de températures, le principe utilisé dans l'invention pour calculer la température $T_{ini}$ du coupleur au redémarrage du véhicule. On retrouve sur la figure 3 des notations communes aux figures précédentes, les mêmes notations représentant les mêmes variables. Sur l'axe des abscisses gradué en heures, sont représentées trois instants d'une séquence arrêt-redémarrage du moteur 5 de la figure 1 qui sont :

A : le moment d'extinction du moteur,
B : le moment d'extinction de l'unité de commande électronique 18,
C : le moment de redémarrage du véhicule.

Trois courbes de température 50, 51 et 52 sont représentées sur la figure.

La courbe 52 représente la température estimée d'air extérieur au véhicule. Elle est représentée sous forme d'une courbe de valeur constante $T_a$, car sur les intervalles de temps antérieurs à A et postérieurs à C, l'estimation de température d'air extérieur est effectuée avec un filtrage temporel qui tend à réduire ces variations ; Sur l'intervalle de temps AC, on ne dispose pas d'estimation de température d'air extérieur, donc on considère que la température reste

constante, égale à la dernière valeur $T_a$ mémorisée dans les moyens 22 au moment de l'extinction du moteur.

La courbe de température 50 représente les variations estimées de température du coupleur 4, et se décompose en deux portions 50a et 50c calculées par le module 23 pendant le roulage du moteur, et en une portion 50b calculée par le module 21 de l'unité de commande électronique 18.

La courbe 51 représente les variations de température du liquide de refroidissement, et se décompose en deux portions 51a et 51c correspondant aux intervalles de temps antérieurs à A et postérieurs à C et en une portion 51b correspondant à l'intervalle de temps AC. Les portions de courbe 51 a et 51c résultent des mesures effectuées par le capteur de température 11, et la portion 51b se déduit du calcul effectué par le module 20 d'estimation du temps passé.

Au moment de l'extinction du moteur, c'est-à-dire à l'instant A, la valeur $T_{max}$ correspondant à la température d'extinction du coupleur au point 53 de la courbe 50, et la valeur $T_0$ correspondant à la température mesurée du liquide de refroidissement au point 56 de la courbe 51, sont mémorisées dans les moyens de mémorisation 22. La valeur $T_a$ de température extérieure au véhicule, estimée par le module 19 à ce même instant, est également mémorisée dans les moyens 22. Au moment où l'on rallume le moteur, c'est-à-dire à l'instant C, le capteur de température 11 donne la température $T_1$ correspondant au point 58 dont on connaît à ce moment la température $T_1$ mais non la coordonnée temporelle. A partir des valeurs $T_0$ et $T_a$, le module 20 d'estimation du temps passé est capable de tracer la portion de courbe 51b partant du point 56, et de trouver le point où cette courbe passe par une ordonnée de température $T_1$, correspondant à la nouvelle température de liquide mesurée par les capteurs 11. Le module 20 en déduit l'abscisse du point 58 et la transmet au module 21, soit en indiquant a valeur $\Delta t_{mission}$ représentant le temps écoulé depuis l'extinction de l'unité de commande électronique 18, soit en lui indiquant la somme $\Delta t=\Delta t_{extinct}+\Delta t_{mission}$ des temps écoulés sur les intervalles de temps AB et BC depuis l'extinction du moteur.

Le module 21, au moment du redémarrage du moteur, va chercher dans les moyens de mémorisation les valeurs $T_{max}$ et $T_a$ correspondant aux valeurs mémorisées pour la dernière température du coupleur et pour la dernière température d'air extérieur, et est capable, à partir de ce deux valeurs, de déduire la portion 50b de la courbe 50 donnant l'historique de refroidissement du coupleur 4 à partir du point 53. En recherchant le point 55 où cette courbe passe par l'abscisse des temps C que lui a transmise le module 20, le module 21 peut déduire la valeur $T_{ini}$ du coupleur 4 au moment du démarrage du véhicule.

Même si le module 21 ne délivre, pour les besoins du pilotage du coupleur, que la température du coupleur au point 55, correspondant au moment du redémarrage du véhicule, le module 21 est capable de calculer tout l'historique de refroidissement correspondant à la portion 50b de la courbe 50. Il suffirait en effet, pour connaître la température du coupleur à un instant quelconque de l'intervalle de temps AC, de fournir au module 21, au lieu de l'intervalle de temps AC correspondant au redémarrage du véhicule, un intervalle de temps quelconque séparant l'instant A et un autre instant antérieur à C.

Suivant les variantes de réalisation, il peut arriver que l'intervalle de temps délivré par le module 20 soit inférieur ou égal à $\Delta t_{extinct}$. Dans ce cas, le module 21 considère que la durée d'arrêt est exactement égale à $\Delta_{textinct}$. Le module 21 délivre alors la valeur de température correspondant au point 54, qui donne la température du coupleur au moment de l'extinction de l'unité de commande électronique 18. Suivant les variantes de réalisation, la valeur de température correspondant au point 54 peut être mémorisée au moment de l'extinction de l'unité de commande électronique 18, ou peut être recalculée *a posteriori,* uniquement si l'on décide que l'on en a besoin comme température du coupleur au redémarrage du véhicule. Si la température du point 54 est mémorisée avant l'extinction de l'unité de commande électronique 18, le module 21 peut l'utiliser pour calculer la température $T_{ini}$, sans réutiliser la valeur $T_{max}$ calculée au moment de l'extinction du moteur.

On peut envisager des variantes de réalisation où l'on continue d'enregistrer la température du liquide de refroidissement après l'extinction d'une partie des fonctions du moteur, jusqu'à l'extinction de l'unité de commande électronique, si bien que l'on enregistre dans les moyens de mémorisation 22 la valeur de température correspondant au point 57 de la courbe 51.

Au moment du redémarrage du véhicule, le module 20 estime alors l'intervalle de temps $\Delta t_{mission}$ à partir de la valeur $T_a$ d'air mémorisée et de la température du point 57. Cette variante est plus précise puisque la température du point 57 est cette fois mesurée et non calculée. En revanche, cette méthode nécessite de laisser en veille une partie des fonctions du moteur, notamment celle liées à la gestion du capteur 11.

L'invention ne se limite pas aux exemples de réalisation décrits et peut faire l'objet de nombreuses variantes, notamment en ce qui concerne les modèles utilisés pour calculer le refroidissement du moteur en contact avec le liquide de refroidissement, et pour calculer le refroidissement du coupleur. La température d'air extérieur au véhicule peut être directement mesurée par un capteur d'air extérieur. On pourra alors choisir, au redémarrage du véhicule, d'utiliser soit la température d'air au moment de l'extinction, soit la température d'air au moment du redémarrage, soit une moyenne pondérée des deux températures mesurées. On peut prévoir d'associer à chaque température mesurée ou estimée, un indicateur booléen de validité qui indiquera si les informations nécessaires à son calcul ou à sa mesure sont suffisamment fiables. On peut alors choisir, quand l'indicateur booléen indique un défaut de fiabilité, soit de conserver, pour la valeur en question, la dernière valeur qu'elle a prise avec un indicateur booléen positif, soit de lui imposer une valeur arbitraire

par défaut.

Le système d'estimation en température suivant l'invention permet d'attribuer une valeur de température à un organe mécanique lors du redémarrage d'un véhicule, en utilisant le minimum de capteurs de température, les capteurs de température utilisés faisant en outre partie des capteurs quasiment incontournables sur un véhicule à moteur à combustion interne. Le système d'estimation selon l'invention permet d'éteindre totalement le système électronique de gestion du véhicule pendant l'arrêt du véhicule. Le système ne risque pas de provoquer une surchauffe des organes dissipatifs, qui serait causée par une initialisation arbitraire trop basse des températures estimées de ces organes. Le système est économique, robuste et sécurisant pour les organes pour lesquels il est utilisé.

## Revendications

1. Système d'estimation de la température ($T_{ini}$) d'un organe mécanique (4) d'un véhicule (1) après un arrêt du véhicule, comprenant :

   - un capteur de température (11) d'un premier élément (10) du véhicule (1) qui peut notamment être une réserve de fluide du véhicule ;
   - un moyen d'estimation (19) de la température d'air extérieure au véhicule;
   - un premier module (23) d'estimation de la température de l'organe (4) pendant le roulage du véhicule,

   comprenant:

   - des moyens de mémorisation (22), pendant l'arrêt du véhicule (1), d'une valeur de température d'air extérieure ($T_a$), d'une valeur de température ($T_0$) du premier élément (10), et d'une valeur de température ($T_{max}$) de l'organe (4);

   **caractérisé en ce qu'**il comprend en outre :

   - un deuxième module (20) apte à calculer une durée d'arrêt ($\Delta t$) du véhicule (1) en fonction d'une valeur de température d'air extérieure ($T_a$), d'une température mémorisée ($T_0$) du premier élément (10) et d'une température mesurée ($T_1$) du premier élément (10);
   - un troisième module (21) apte à calculer un historique thermique de variation de température de l'organe (4) pendant l'arrêt du véhicule (1), en fonction d'une valeur de température d'air extérieure ($T_a$), d'une température mémorisée ($T_{max}$) de l'organe (4) et d'une durée d'arrêt du véhicule ($\Delta t$, $\Delta t_{missions}$) calculée par le deuxième module (20).

2. Système d'estimation de température suivant la revendication 1, dans lequel le troisième module (21) est configuré pour calculer l'évolution en température de l'organe (4) pendant une durée prédéterminée ($\Delta t_{extinct}$) après l'arrêt du véhicule (1), puis pour s'éteindre jusqu'à un nouveau démarrage du véhicule (1).

3. Système d'estimation de température suivant la revendication 2, dans lequel le troisième module (21) est configuré pour attribuer à la température estimée ($T_{ini}$) de l'organe (4) au redémarrage du véhicule (1), la dernière valeur de température ($T_{coff}$) calculée pour l'organe (4) avant l'extinction du troisième module (23), si la durée d'arrêt ($\Delta t$) du véhicule (1) que lui transmet le deuxième module (20) est inférieure ou égale à la durée prédéterminée ($\Delta t_{extinct}$).

4. Système d'estimation de température suivant l'une des revendications précédentes, dans lequel le deuxième (20) et respectivement le troisième (21) modules calculent la durée d'arrêt ($\Delta t$) et l'historique de température à l'arrêt de l'organe (4), ou sa dernière température à l'arrêt ($T_{ini}$), respectivement en effectuant un bilan thermique sur les échanges entre le premier élément (10) et l'air extérieur au véhicule (1), ou respectivement en effectuant un bilan thermique sur les échanges entre l'organe (10) et l'air extérieur au véhicule (1).

5. Système d'estimation de température suivant l'une des revendications précédentes, dans lequel les deuxième (20) et troisième (21) modules utilisent des profils exponentiels de variation, par rapport au temps, de l'écart d'une température par rapport à la température extérieure au véhicule (1), pour estimer la durée de l'arrêt ($\Delta t$, $\Delta t_{missions}$) ou pour estimer l'ampleur d'une variation de température.

6. Système d'estimation de température suivant l'une des revendications précédentes, comprenant un ou plusieurs premiers modules (23) aptes à calculer une ou plusieurs températures internes à un coupleur (4) transférant du

couple d'un train de roues (2) du véhicule à un autre train de roues (3) du véhicule, et comportant un ou plusieurs troisièmes modules (21) aptes à calculer une ou plusieurs températures internes du coupleur (4) après un arrêt de durée indéterminée du véhicule (1).

**7.** Système d'estimation de température suivant l'une des revendications précédentes, dans lequel, à chaque valeur estimée de température, est associé un indicateur booléen de validité et une valeur de température par défaut, qui est substituée à la valeur estimée si l'indicateur booléen prend une valeur prédéterminée.

**8.** Système d'estimation de température suivant l'une des revendications précédentes, dans lequel le premier élément (10) est du liquide de refroidissement présent au voisinage du moteur (5).

**9.** Véhicule à moteur à combustion interne équipé d'un système d'estimation de température suivant l'une des revendications précédentes, et équipé d'un module (19) d'estimation de la température extérieure au véhicule (1) relié à un capteur (8) de température d'air admis dans le moteur du véhicule, à un capteur (11) de température de liquide de refroidissement (10) du moteur (1), et à un moyen d'estimation de la vitesse du véhicule (1).

**10.** Procédé d'estimation de la température d'un organe mécanique (4) d'un véhicule à moteur thermique (5) après un arrêt du véhicule (1), comprenant les étapes suivantes :

- à l'arrêt du véhicule (1), on écrit dans des mémoires mortes (22) une dernière température mesurée ($T_0$) de liquide de refroidissement (10) du véhicule(1), une dernière température mesurée ou estimée ($T_a$) d'air extérieur au véhicule, une dernière température estimée ($T_{max}$) de l'organe (4);
- au redémarrage du véhicule (1), on mesure la température ($T_1$) de liquide de refroidissement (10) du véhicule, et on déduit, à partir de cette température et des trois températures mémorisées précédentes, une nouvelle température ($T_{ini}$) de l'organe (4),
- on utilise cette nouvelle température ($T_{ini}$) de l'organe (4) comme température initiale pour une estimation ultérieure de la température de l'organe (4) pendant le roulage du véhicule (1).

**11.** Procédé d'estimation de température suivant la revendication précédente, dans lequel la relation qui relie la dernière température mesurée ou estimée d'air extérieur $T_a$, la dernière température estimée de l'organe $T_{max}$, la dernière température $T_0$ mesurée au même moment pour le liquide de refroidissement du véhicule, la température $T_1$ du liquide de refroidissement au démarrage, et la nouvelle température de l'organe $T_{ini}$, est une relation exponentielle de la forme :

$$\frac{T_o - T_a}{T_1 - T_a} = \left(\frac{T_{ini} - T_a}{T_{\max} - T_a}\right)^A,$$

où A est une valeur réelle positive.

## Patentansprüche

**1.** System zum Schätzen der Temperatur ($T_{ini}$) eines mechanischen Organs (4) eines Fahrzeugs (1) nach einem Halt des Fahrzeugs, das Folgendes umfasst:

- einen Sensor (11) für die Temperatur eines ersten Elements (10) des Fahrzeugs (1), das insbesondere ein Fluidvorratsbehälter des Fahrzeugs sein kann;
- ein Mittel (19) zum Schätzen der Außenlufttemperatur des Fahrzeugs;
- ein erstes Modul (23) zum Schätzen der Temperatur des Organs (4) während der Fahrt des Fahrzeugs,

umfassend:

- Mittel (22) zum Speichern eines Werts der Außenlufttemperatur ($T_a$), eines Werts der Temperatur ($T_0$) des ersten Elements (10) und eines Werts der Temperatur ($T_{max}$) des Organs (4) während des Halts des Fahrzeugs (1);

**dadurch gekennzeichnet, dass** es außerdem umfasst:

- ein zweites Modul (20), das eine Haltedauer ($\Delta t$) des Fahrzeugs (1) als Funktion eines Werts der Außenlufttemperatur ($T_a$), einer gespeicherten Temperatur ($T_0$) des ersten Elements (10) und einer gemessenen Temperatur ($T_1$) des ersten Elements (10) berechnen kann;
- ein drittes Modul (21), das eine Wärmehistorie der Veränderung der Temperatur des Organs (4) während des Halts des Fahrzeugs (1) als Funktion eines Werts der Außenlufttemperatur ($T_a$), einer gespeicherten Temperatur ($T_{max}$) des Organs (4) und einer Haltedauer des Fahrzeugs ($\Delta t$, $\Delta t_{missions}$), die durch das zweite Modul (20) berechnet wird, berechnen kann.

**2.** Temperaturschätzsystem nach Anspruch 1, wobei das dritte Modul (21) konfiguriert ist, die Temperaturentwicklung des Organs (4) während einer vorgegebenen Dauer ($\Delta t_{extinct}$) nach dem Halt des Fahrzeugs (1) zu berechnen und dann betriebslos zu werden, bis das Fahrzeug (1) erneut anfährt.

**3.** Temperaturschätzsystem nach Anspruch 2, wobei das dritte Modul (21) konfiguriert ist, zu der geschätzten Temperatur ($T_{ini}$) des Organs (4) beim erneuten Anfahren des Fahrzeugs (1) den letzten Temperaturwert ($T_{coff}$), der für das Organ (4) vor dem Übergang des dritten Moduls (23) in den betriebslosen Zustand berechnet wurde, hinzuzufügen, falls die Haltedauer ($\Delta t$) des Fahrzeugs (1), die das zweite Modul (20) an es übertragen hat, kleiner oder gleich der vorgegebenen Dauer ($\Delta t_{extinct}$) ist.

**4.** Temperaturschätzsystem nach einem der vorhergehenden Ansprüche, wobei das zweite Modul (20) bzw. das dritte Modul (21) die Haltedauer ($\Delta t$) und die Temperaturhistorie beim Halt des Organs (4) bzw. seine letzte Temperatur beim Halt ($t_{ini}$) berechnen, indem sie eine Wärmebilanz für die Austauschvorgänge zwischen dem ersten Element (10) und der Außenluft des Fahrzeugs (1) bewerkstelligen bzw. eine Wärmebilanz für die Austauschvorgänge zwischen dem Organ (10) und der Außenluft des Fahrzeugs (1) bewerkstelligen.

**5.** Temperaturschätzsystem nach einem der vorhergehenden Ansprüche, wobei das zweite Modul (20) und das dritte Modul (21) exponentielle zeitliche Veränderungsprofile des Abstands einer Temperatur in Bezug auf die Außentemperatur des Fahrzeugs (1) verwenden, um die Haltedauer ($\Delta t$, $\Delta t_{missions}$) zu schätzen oder das Ausmaß einer Veränderung der Temperatur zu schätzen.

**6.** Temperaturschätzsystem nach einem der vorhergehenden Ansprüche, das ein oder mehrere erste Module (23) umfasst, die eine oder mehrere interne Temperaturen eines Kopplers (4) berechnen können, der Drehmoment von einem Achssatz (2) des Fahrzeugs an einen anderen Achssatz (3) des Fahrzeugs überträgt, und ein oder mehrere dritte Module (21) umfasst, die eine oder mehrere interne Temperaturen des Kopplers (4) nach einem Halt mit unbestimmter Dauer des Fahrzeugs (1) zu berechnen.

**7.** Temperaturschätzsystem nach einem der vorhergehenden Ansprüche, wobei jedem geschätzten Wert der Temperatur ein Boolscher Gültigkeitsindikator und ein voreingestellter Temperaturwert, der durch den geschätzten Wert ersetzt wird, falls der Boolsche Indikator einen vorgegebenen Wert annimmt, zugeordnet werden.

**8.** Temperaturschätzsystem nach einem der vorhergehenden Ansprüche, wobei das erste Element (10) Kühlflüssigkeit ist, die in der Umgebung der Kraftmaschine (5) vorhanden ist.

**9.** Fahrzeug mit Brennkraftmaschine, das mit einem Temperaturschätzsystem nach einem der vorhergehenden Ansprüche versehen ist und mit einem Modul (19) zum Schätzen der Außentemperatur des Fahrzeugs (1) versehen ist, das mit einem Sensor (8) für die Temperatur der in die Kraftmaschine des Fahrzeugs eingelassenen Luft, einem Sensor (11) für die Temperatur der Kühlflüssigkeit (10) der Kraftmaschine (1) und mit einem Mittel zum Schätzen der Geschwindigkeit des Fahrzeugs (1) verbunden ist.

**10.** Verfahren zum Schätzen der Temperatur eines mechanischen Organs (4) eines Fahrzeugs mit Wärmekraftmaschine (5) nach einem Halt des Fahrzeugs (1), das die folgenden Schritte umfasst:

- bei einem Halt des Fahrzeugs (1) Schreiben einer letzten gemessenen Temperatur ($T_0$) der Kühlflüssigkeit (10) des Fahrzeugs (1), einer letzten gemessenen oder geschätzten Temperatur ($T_a$) der Außenluft des Fahrzeugs und einer letzten geschätzten Temperatur ($T_{max}$) des Organs (4) in einen Festwertspeicher (22);
- beim einem erneuten Anfahren des Fahrzeugs (1) Messen der Temperatur ($T_1$) der Kühlflüssigkeit (10) des Fahrzeugs und Ableiten einer neuen Temperatur ($T_{ini}$) des Organs (4) anhand dieser Temperatur und der drei

vorhergehenden gespeicherten Temperaturen,
- Verwenden dieser neuen Temperatur ($T_{ini}$) des Organs (4) als Anfangstemperatur für eine spätere Schätzung der Temperatur des Organs (4) während der Fahrt des Fahrzeugs (1).

**11.** Temperaturschätzverfahren nach dem vorhergehenden Anspruch, wobei die Beziehung, die die letzte gemessene oder geschätzte Temperatur $T_a$ der Außenluft, die letzte geschätzte Temperatur $T_{max}$ des Organs, die letzte gemessene Temperatur $T_0$ zu dem gleichen Zeitpunkt für die Kühlflüssigkeit des Fahrzeugs, die Temperatur $T_1$ der Kühlflüssigkeit beim Anfahren und die neue Temperatur $T_{ini}$ des Organs, in Beziehung setzt, eine exponentielle Beziehung der folgenden Form ist:

$$\frac{T_0 - T_a}{T_1 - T_a} = \left(\frac{T_{ini} - T_a}{T_{max} - T_a}\right)^A,$$

wobei A ein positiver reeller Wert ist.

## Claims

**1.** System for estimating the temperature ($T_{ini}$) of a mechanical member (4) of a vehicle (1) after the vehicle is stopped, including:

- a temperature sensor (11) of a first element (10) of the vehicle (1) which may notably be a fluid tank of the vehicle;
- a means of estimating (19) the temperature of the air outside the vehicle;
- a first module (23) for estimating the temperature of the member (4) while the vehicle is traveling, including:
- a means of storage (22), while the vehicle (1) is stopped, of an outside air temperature value ($T_a$), a temperature value ($T_0$) of the first element (10), and a temperature value ($T_{max}$) of the member (4);

**characterized in that** it further includes:

- a second module (20) capable of calculating a stoppage period ($\Delta t$) of the vehicle (1) according to an outside air temperature value ($T_a$), a stored temperature ($T_0$) of the first element (10) and a measured temperature ($T_1$) of the first element (10);
- a third module (21) capable of calculating a thermal history of temperature variation of the member (4) while the vehicle (1) is stopped, according to an outside air temperature value ($T_a$), a stored temperature ($T_{max}$) of the member (4) and a stoppage period of the vehicle ($\Delta t$, $\Delta T_{missions}$) calculated by the second module (20).

**2.** Temperature estimation system according to Claim 1, wherein the third module (21) is configured for calculating the change in temperature of the member (4) during a preset period ($\Delta t_{extinct}$) after the vehicle (1) is stopped, then for switching off until another vehicle (1) start-up.

**3.** Temperature estimation system according to Claim 2, wherein the third module (21) is configured for assigning to the estimated temperature ($T_{ini}$) of the member (4) when the vehicle (1) is restarted, the last temperature value ($T_{coff}$) calculated for the member (4) before the third module (23) is switched off, if the stoppage period ($\Delta t$) of the vehicle (1) that the second module (20) transmits to it is less than or equal to the preset period ($\Delta t_{extinct}$).

**4.** Temperature estimation system according to one of the preceding claims, wherein the second (20) and third (21) modules respectively calculate the stoppage period ($\Delta t$) and the temperature history at the stoppage of the member (4), or its last temperature ($T_{ini}$) on stopping, respectively by performing a heat balance on the exchanges between the first element (10) and the air outside the vehicle (1), or respectively by performing a heat balance on the exchanges between the member (10) and the air outside the vehicle (1).

**5.** Temperature estimation system according to one of the preceding claims, wherein the second (20) and third (21) modules use exponential profiles of variation, with respect to time, of the difference of a temperature with respect to the temperature outside the vehicle (1), for estimating the stoppage period ($\Delta t$, $\Delta t_{missions}$) or for estimating the extent of a temperature variation.

6. Temperature estimation system according to one of the preceding claims, including one or more first modules (23) capable of calculating one or more internal temperatures of a coupler (4) transferring the torque of one set of wheels (2) of the vehicle to another set of wheels (3) of the vehicle, and comprising one or more third modules (21) capable of calculating one or more internal temperatures of the coupler (4) after an indeterminate stoppage period of the vehicle (1).

7. Temperature estimation system according to one of the preceding claims, wherein, each estimated temperature value is associated with a Boolean validity indicator and a default temperature value, which replaces the estimated value if the Boolean indicator takes a preset value.

8. Temperature estimation system according to one of the preceding claims, wherein the first element (10) is cooling liquid present in the vicinity of the engine (5).

9. Internal combustion engine vehicle equipped with a temperature estimation system according to one of the preceding claims, and equipped with a module (19) for estimating the temperature outside the vehicle (1) connected to an engine intake air temperature sensor (8) of the vehicle, to an engine (1) cooling liquid (10) temperature sensor (11), and to a means for estimating the speed of the vehicle (1).

10. Method of estimating the temperature of a mechanical member (4) of a combustion engine vehicle (5) after the vehicle (1) is stopped, including the following steps:

- when the vehicle (1) stops, a last measured temperature ($T_0$) of the vehicle's (1) cooling liquid (10), a last measured or estimated temperature ($T_a$) of air outside the vehicle, a last estimated temperature ($T_{max}$) of the member (4), are written to read-only memories (22);
- when the vehicle (1) is restarted, the vehicle's cooling liquid (10) temperature ($T_1$) is measured, and from this temperature and the three preceding stored temperatures, a new temperature ($T_{ini}$) of the member (4) is deduced,
- this new temperature ($T_{ini}$) of the member (4) is used as an initial temperature for a subsequent estimate of the temperature of the member (4) while the vehicle (1) is traveling.

11. Temperature estimation method according to the preceding claim, wherein the relationship that connects the last measured or estimated outside air temperature $T_a$, the last estimated temperature of the member $T_{max}$, the last temperature $T_0$ measured at the same moment for the vehicle's cooling liquid, the temperature $T_1$ of the cooling liquid at the start-up, and the new temperature of the member $T_{ini}$, is an exponential relationship of the form:

$$\frac{T_0 - T_a}{T_1 - T_a} = \left(\frac{T_{ini} - T_a}{T_{max} - T_a}\right)^A ,$$

where A is a positive real value.

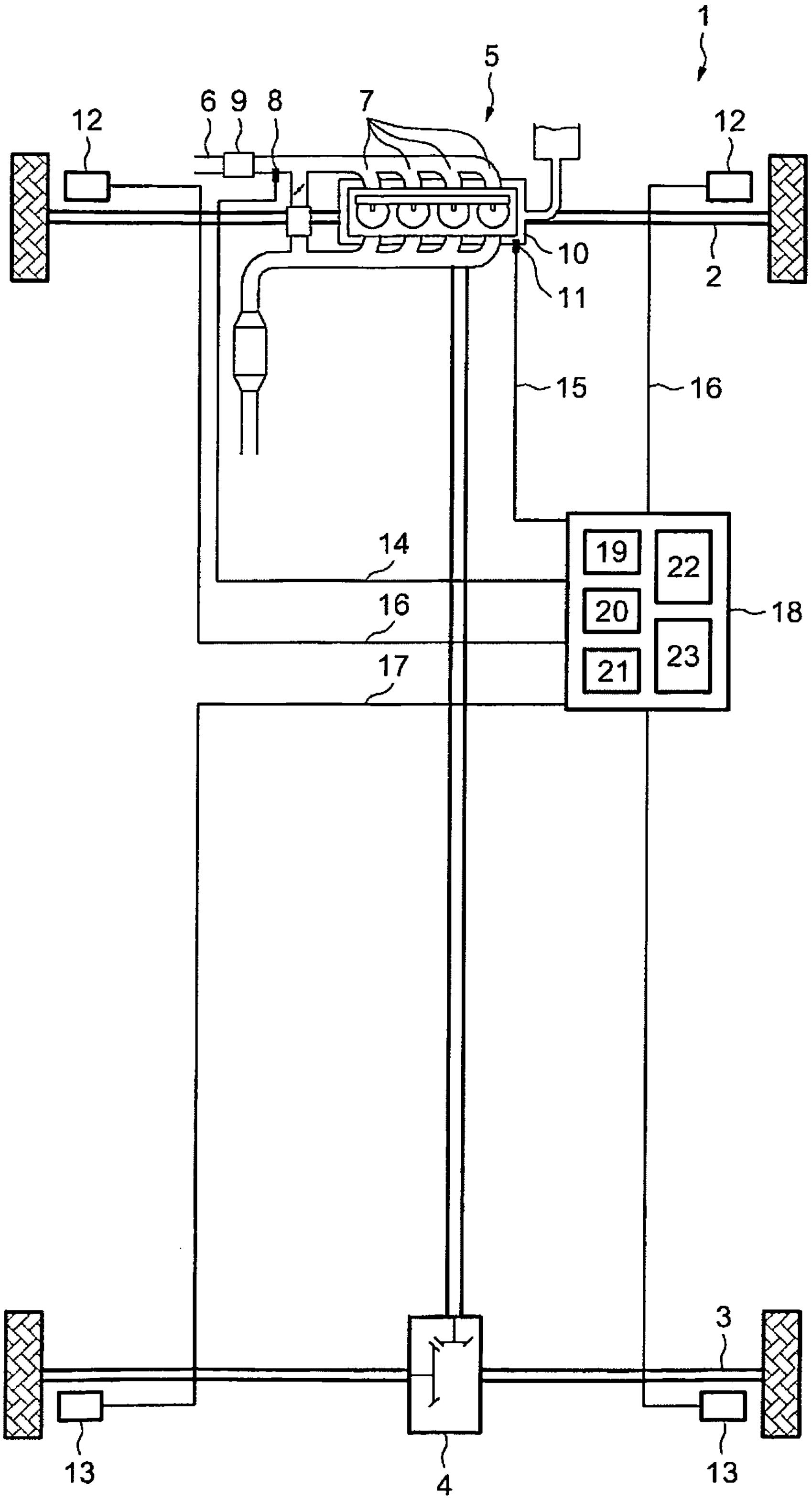


FIG.1

FIG.2

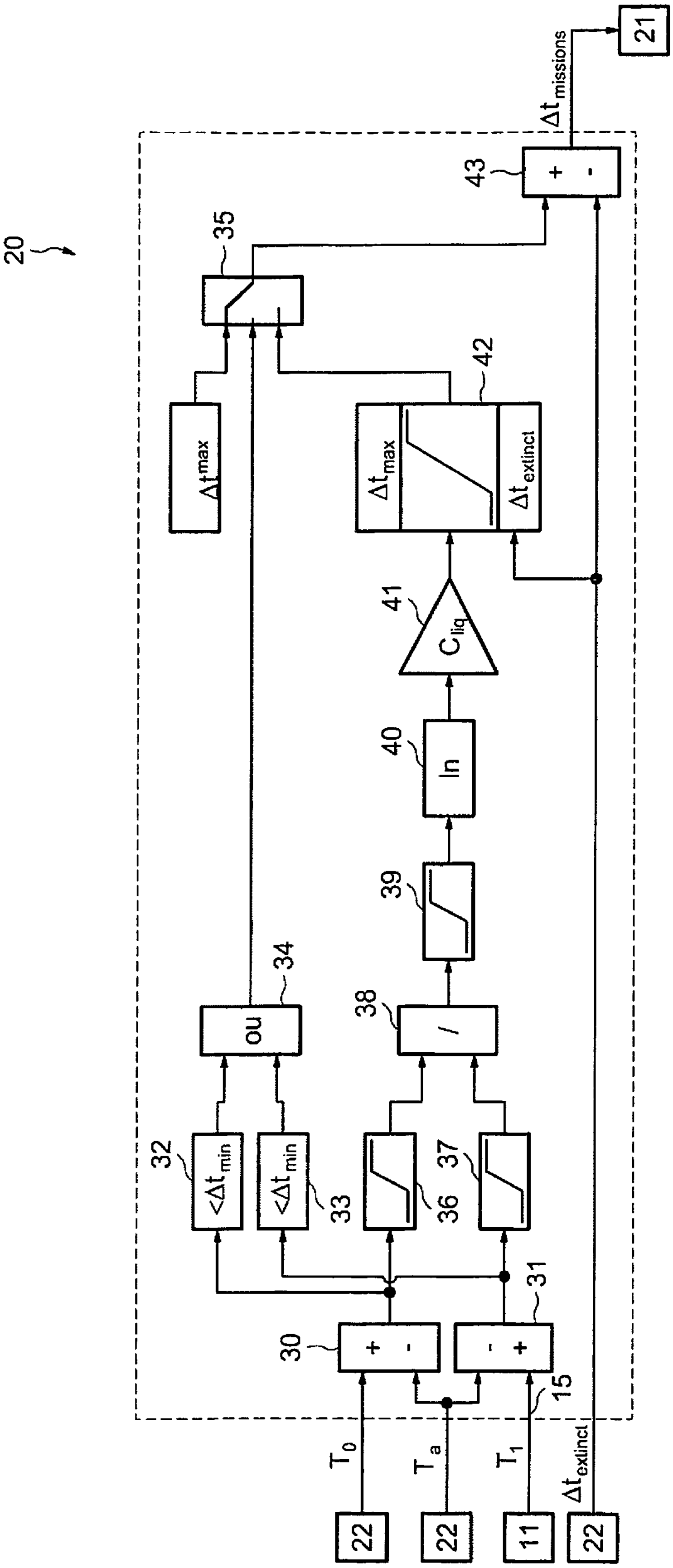
20
30
31
32
33
34
35
36
37
38
39
40
41
42
43
15
22
22
11
22
21
$T_0$
$T_a$
$T_1$
$\Delta t_{extinct}$
$\Delta t_{missions}$
$<\Delta t_{min}$
$<\Delta t_{min}$
ou
/
ln
$C_{liq}$
$\Delta t^{max}$
$\Delta t_{max}$
$\Delta t_{extinct}$
+
-

FIG.3

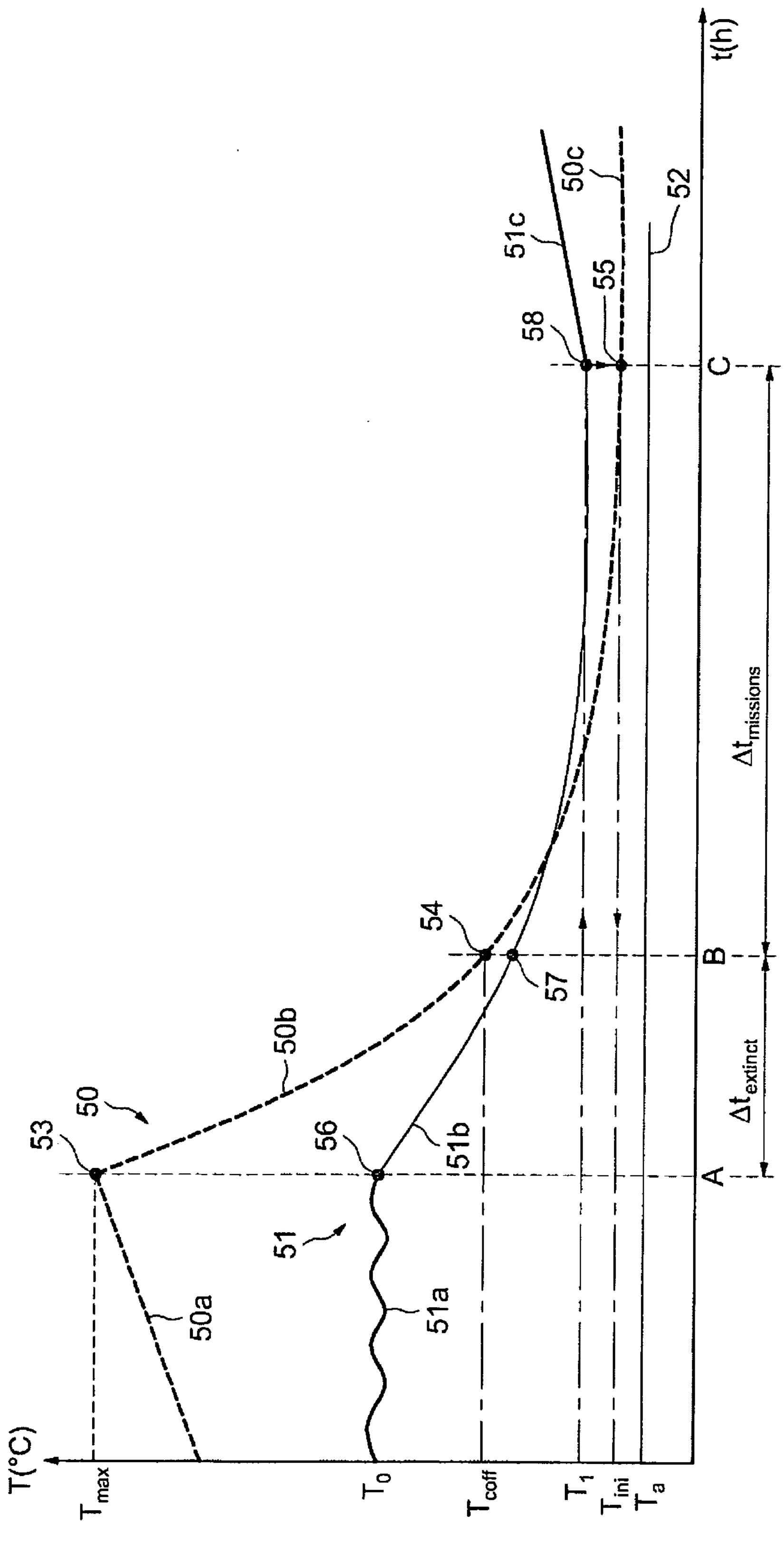
T(°C)
$T_{max}$
$T_0$
$T_{coff}$
$T_1$
$T_{ini}$
$T_a$
t(h)
50
50a
50b
50c
51
51a
51b
51c
52
53
54
55
56
57
58
A
B
C
$\Delta t_{extinct}$
$\Delta t_{missions}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2009182489 A1
- EP 1308336 A